# EUROPEAN PATENT SPECIFICATION

(11) **EP 3 672 801 B1**
(45) Date of publication and mention of the grant of the patent: **04.05.2022**
(21) Application number: 18713523.1
(22) Date of filing: 09.03.2018
(51) Int. Cl.: B32B 27/08, B32B 7/12, B32B 15/085, B32B 15/20, B32B 27/20, B32B 27/30, B32B 27/32

(54) **RECYCLABLE PLASTIC PACKAGE**
RECYCLINGFÄHIGE KUNSTSTOFFVERPACKUNG
EMBALLAGE EN PLASTIQUE RECYCLABLE

(43) Date of publication of application: 01.07.2020
(73) Proprietor: Colgate-Palmolive Company, New York, NY 10022 (US)
(72) Inventor: WANG, Jun, Washington, Pennsylvania 19034 (US)
(74) Representative: Schicker, Silvia
(86) International application number: PCT/US2018/021751
(87) International publication number: WO 2019/172932

(56) References cited:
- EP-A1- 3 040 199
- JP-A- 2004 291 538
- US-A- 6 087 001
- US-A1- 2016 339 663

## Description

### BACKGROUND

Recycling is a way to prevent waste material from being deposited in a landfill. Currently, rigid packaging, such as polyethylene terephthalate (PET) bottles and high-density polyethylene (HDPE) bottles, may be recycled. However, flexible packaging, such as (e.g., toothpaste) tubes, may not be recycled for two reasons. First, the tubes are made from multiple different plastics, such as low-density polyethylene (LDPE), linear low-density polyethylene (LLDPE), HDPE, polypropylene (PP), ethylene vinyl alcohol (EVOH), aluminum foil, and mixtures of these materials are not recyclable. Second, the infrastructure of recycling plants is not designed to receive and process flexible packaging.
EP 3 040 199 A1 refers to a 5-layer structure wherein a polyolefin layer comprises a polyethylene, a tie layer, a polar layer, a second tie layer, and a second polyolefin layer. US 2016/0339663 A1 relates to an optionally printed, laminated structure that is prepared by laminating a first polyethylene web to a second polyethylene web.

### BRIEF SUMMARY

The present invention relates to a recyclable package as defined in claim 1. Preferred embodiments are defined by the dependent claims. The recyclable package includes an outer layer consisting essentially of a first high-density polyethylene (HDPE), an inner layer including a second HDPE, a barrier layer positioned between the outer layer and the inner layer, a first bonding layer positioned between the outer layer and the barrier layer, and a second bonding layer positioned between the inner layer and the barrier layer.

In one aspect, the recyclable package may consist of an outer layer consisting essentially of a first high-density polyethylene (HDPE), an inner layer consisting essentially of a second HDPE, a barrier layer positioned between the outer layer and the inner layer, a first bonding layer positioned between the outer layer and the barrier layer, and a second bonding layer positioned between the inner layer and the barrier layer.

In yet another aspect not forming an embodiment of the invention, the recyclable package may include an outer layer including a high-density polyethylene (HDPE), an inner layer including the HDPE, a barrier layer positioned between the outer layer and the inner layer; a first bonding layer positioned between the outer layer and the barrier layer; and a second bonding layer positioned between the inner layer and the barrier layer. The outer layer and the inner layer may not include a low-density polyethylene (LDPE), a linear low-density polyethylene (LLDPE), a medium-density polyethylene (MDPE), or a polypropylene (PP).

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawing, wherein:
Figure 1 depicts a side view of an example of a flexible package (e.g., a tube), according to an embodiment.
Figure 2 depicts a cross-sectional side view of the side wall of an example of the flexible package shown in Figure 1, according to an embodiment.

### DETAILED DESCRIPTION

The following description of the preferred embodiment(s) is merely exemplary in nature and is in no way intended to limit the invention, its applications, or uses.

As used throughout, ranges are used as shorthand for describing each and every value that is within the range. Any value within the range can be selected as the terminus of the range. In addition, in the event of a conflict in a definition in the present disclosure and that of a cited reference, the present disclosure controls.

A flexible package (e.g., a tube) that is capable of being recycled is disclosed herein. The flexible package includes a sleeve portion and a shoulder portion that are made using HDPE grades that have similar mechanical and thermal properties to the HDPE grades used in recyclable bottles. In the sleeve portion, a low percentage of EVOH and tie resin may be used to provide a flavor/fragrance barrier. The materials used to make the flexible package are compatible with the existing HDPE bottle recycling stream because the low percentage of the contaminants (e.g., EVOH, tie resin, etc.) do not affect the processing and performance properties of recycled HDPE resin. Therefore, the contaminants may be recycled with the base resin (e.g., a pigmented HDPE bottle resin).

The sleeve portion and shoulder portion meet their respective specifications for the current conventional tube-making processes. More particularly, the sleeve portion is flat with sufficient printability and sealibility, and its coefficient of friction (COF) falls within the range that conventional tube-making machines can handle.
The specifications for the shoulder portion include the productivity and the dimension stability.

The conventional shoulder portion uses injection molding grade HDPE with a high melt flow index (e.g., 12-40 measured at 190 C/2.16 kg (ASTM D1238, ISO 1133), which may be considered a contaminate in the bottle-grade HDPE, which has melt flow index of 0.2-0.7. As a result, the recyclable flexible package disclosed herein uses a low melt flow index HDPE of 0.9-4.0, and the injection molding process temperature was increased to increase its melt flow to meet the injection molding production speed. Normally, a low melt index grade resin has slow melt flow and is difficult to process at high speed like in an injection molding process. Here, however, a balance was found between a low melt index close to bottle grade HDPE and a processability to meet injection molding productivity (production speed). The flexible package disclosed herein can be made using the conventional tube-making processes, and can be collected, separated, and recovered for reuse according to the conventional HDPE bottle recycling stream.

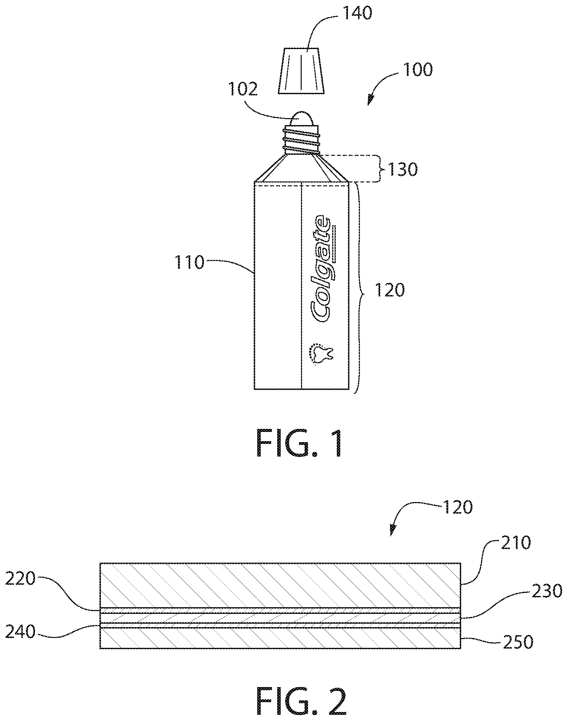

Figure 1 depicts a side view of an example of a flexible package (e.g., a tube) 100, according to an embodiment. The flexible package 100 includes a body 110 that defines an internal volume in which a consumer product 102 may be stored. The consumer product 102 may be almost any viscous liquid, gel, or paste product, examples of which include toothpaste, mouthwash, condiments (e.g., ketchup, mustard, mayonnaise), soap, detergent, medicinal preparations, bodywash, body lotion, shampoo, cosmetic products (e.g., creams).

The body 110 may include a sleeve portion 120 and a shoulder portion 130. As described below, the shoulder portion 130 may be formed via injection molding (e.g., from HDPE). In at least one arrangement, an insert (not shown) may be positioned under or lining the inside of the shoulder portion 130, for example, to prevent the flavor/fragrance of the consumer product 102 from leaching into or leaking through the shoulder portion 130. The flexible package 100 may also include a cap 140 that is used to cover an opening through which the consumer product 102 may flow. The cap 140 may be made from polypropylene. The cap 140 does not affect the recyclability because 1) it can be removed and separated from the tube body and 2) in the recycling industry, there is a certain level of tolerance of polypropylene in HDPE; therefore, the recommendation from recycling industry is to leave the cap on for bottles, such as detergent bottles.

Figure 2 depicts a cross-sectional side view of an example of a portion (e.g., a sleeve portion 120 of the side wall) of the flexible package 100 shown in Figure 1, according to an embodiment. The sleeve portion 120 of the flexible package 100 may include a first, (e.g., outer) layer 210 and a second (e.g., inner) layer 250 that are made via a cast film or a blown film process. The sleeve portion 120 (including the outer and inner layers 210, 250) may be made via one step (e.g., via a co-extruded cast film-making process or a blown film-making process). In other words, the outer and inner layers 250 may be made simultaneously, not separately. The outer and/or inner layers 210, 250 may be single-layer or include multiple sub-layers.

The outer and inner layers 210, 250 may be made from HDPE. In some embodiments, the outer and inner layers 210, 250 may also include a pigment (e.g., a white pigment), as described below. However, the outer and inner layers 210, 250 may not include LDPE, LLDPE, medium density polyethylene (MDPE), and/or PP-based elastomers/plastomers, other than possibly trace amounts. Thus, the terms "consisting of a HDPE" and "consisting essentially of a HDPE" may mean including the HDPE and a possibly a pigment, but not including LDPE, LLDPE, MDPE, and/or PP, except for amounts that are less than the threshold for the HDPE recycling stream. These materials are absent from the outer layer 210 and the inner layer 250 in order to enable recycling using existing conventional HDPE bottle recycling stream. However, in one embodiment, as described below, some LDPE and/or LLDPE may be used in the inner layer 250 to provide sealability and to still keep the total density of the material within the bottle HDPE density recycling range.

In various examples, the HDPE may have a density that is greater than about 0.94 g/cm³ or about 0.96 g/cm³. For example, the HDPE may have a density that is from about 0.94 g/cm³ to about 1.00 g/cm³, about 0.96 g/cm³ to about 1.00 g/cm³ In some examples, the HDPE may have a melt flow index that is less than 1.0 g/ 10 min. In other examples, the melt flow index may be from about 0.3 g/ 10 min to about 5.0 g/ 10 min, about 0.8g/ 10 min to about 1.4 g/10 min, or about 0.5 g/ 10 min to about 1.0 g/ 10 min or greater, measured at 190 C/2.16 kg (ASTM D1238, ISO 1133).

The outer layer 210 may be proportioned to provide mechanical strength and rigidity to the flexible package 100. In various examples, the outer layer 210 may have a thickness from about 100 µm to about 300 µm. For example, the outer layer 210 may have a thickness from about 180 µm to about 250 pm, about 150 µm to about 170 µm, about 160 µm to about 180 µm, about 120 µm to about 140 µm, about 145 µm to about 165 µm. The outer layer 210 may include a compatibilizer in an amount from about 5 wt% to about 20 wt%, and the compatibilizer may have a density from about 0.85 g/cm3 to about 0.90 g/cm3.

The inner layer 250 may be proportioned to provide a sealing function to the flexible package 100 and to provide a good sealing at the side seam and, in the shoulder portion 130, and at the end of the seal after the flexible package 100 is filled with the consumer product 102. In at least one arrangement, the inner layer 250 may have a thickness that is less than the thickness of the outer layer 210 to reduce its scalping of the flavor/fragrance of the consumer product 102. In various examples, the inner layer 250 may be less than 100 µm thick in order to reduce the loss of quality of the enclosed consumer product 102 due to either the consumer product's volatile flavors being absorbed by the inner layer 250 or the consumer product 102 absorbing undesirable flavors from the inner layer 250. For example, the inner layer 250 may have a thickness from about 20 µm to about 100 µm, about 30 µm to about 50 µm, about 40 µm to about 60 µm, about 30 µm to about 40 µm, about 40 µm to about 50 µm, or about 45 µm to about 55 µm.

The outer and inner layers 210, 250 may be bonded together with a barrier layer 230 positioned therebetween. More particularly as shown in the example of Fig. 2, a first (e.g., outer) bonding layer 220 may be positioned between the outer layer 210 and the barrier layer 230, and a second (e.g., inner) bonding layer 240 may be positioned between the inner layer 250 and the barrier layer 230. In various examples, the barrier layer 230 may have a thickness from about 3 µm to about 30 µm, and the first and/or second bonding layers 220, 240 may have a thickness from about 3 µm to about 10 µm or about 10 µm to about 30 µm.

The process (e.g., in addition to a one-step co-extrusion film-making process or blown film-making process) may be or include adhesive lamination and/or extrusion lamination. In the adhesive lamination process, the first and second bonding layers 220, 240 may be or include an adhesive material to bond/adhere the outer and inner layers 210, 250 to the barrier layer 230. In the extrusion lamination process, the first and second bonding layers 220, 240 may be or include an extruded melted tie resin (e.g., ethylene acrylic acid (EAA)) to bond/adhere the outer and inner layers 210, 250 to the barrier layer 230. The barrier layer 230 may be a plastic material (e.g., ethylene-vinyl alcohol copolymer (EVOH)), in which case the laminate is referred to as plastic barrier laminate (PBL).

The flexible package 100 may have a basic weight or density from about 270 g/sqm to about 310 g/sqm, about 225 g/sqm to about 265 g/sqm, about 205 g/sqm to about 245 g/sqm, about 220 g/sqm to about 260 g/sqm, or about 230 g/sqm to about 270 g/sqm. The flexible package 100 may have a static coefficient of friction from about 0.36 to about 0.46, from about 0.20 to about 0.30, about 0.30 to about 0.40, about 0.35 to about 0.40, or about 0.45 to about 0.50, as measured by ASTM D1894. The flexible package 100 may have a kinetic coefficient of friction from about 0.36 to about 0.46, from about 0.20 to about 0.30, about 0.30 to about 0.40, about 0.35 to about 0.40, or about 0.45 to about 0.50, as measured by ASTM D1894. The flexible package 100 may have a free-falling dart impact strength from about 430 g to about 460 g, from about 450 g to about 480 g, from about 390 g to about 420 g, about 385 g to about 415 g, or about 570 g to about 610 g, as measured by ASTM D1709.

In some examples, the sleeve portion 120 may further include a sealant layer (not shown in Fig. 2) that is inside the inner layer 250 (e.g., below inner layer 250 in the orientation of Fig. 2), and that further increases sealability. In some such examples, the sealant layer may be made of a thin layer of LLDPE, for example a layer of LLDPE having a thickness less than 30 µm, such as 15 µm.

### Example 1: Sleeve Portion 120 - not part of the invention

A 5-layer cast co-extrusion film sleeve portion 120 was made with the following structure (e.g., from outer to inner):
- A first layer made of HDPE and having a thickness of 195 µm;
- A second layer made of Tie resin and having a thickness of 5 µm;
- A third layer made of EVOH and having a thickness of 15 µm;
- A fourth layer made of Tie resin and having a thickness of 5 µm;
- A fifth layer made of HDPE and having a thickness of 40 µm.

Thus, the thickness of the outer layer 210 was 195 µm, the thickness of the inner layer 250 was 40 µm, and the total thickness of the flexible package 100 was 260 µm. The HDPE in Example 1 had a density (d) of > 0.95 g/cm³ and a melt flow index of < 1 g/ 10 min. In a particular example, the HDPE may be or include Dow Chemical's Elite 5960G, which has a density of 0.964 and a melt flow of 0.85.

The tie resin was a functional co-polymer of polyethylene. In a particular example, the tie resin may be or include Dupont's BYNEL^{Ⓡ}series, Dow Chemical's PRIMACOR^{Ⓡ} series. The flexible package 100 in this example had a rigidity similar to a flexible package made of LDPE/LLDPE with a total thickness of 400 µm. Multiple other HDPEs can also be used, as shown in Tables 1 and 2 below, where MFR means melting flow rate (190°C/2.16Kg), Tensile means tensile strength, E@B means elongation at break, Modulus means Young's or flexural modulus, Shore D means hardness, Tm means melting temperature, D means density in g/cm³, MI means melt flow index (190°C/2.16Kg), Tensile @Y MD means tensile strength at yield in the machine direction, Tensile @ Y TD means tensile strength at yield in the transverse direction, E@B MD means elongation at break in the machine direction, and E@B TD means elongation at break in the transverse direction.

| Table 1 | | | | | | | |
|---|---|---|---|---|---|---|---|
| Grade | Density | MFR | Tensile (Mpa) | E@B (%) | Modulus (GPa) | Shore D | Tm (C) |
| Total BM 593 | 0.959 | 0.27 | 30 (12 u film) | 610 | 1.4 | | |
| Total 5908 | 0.961 | 0.80 | 32 (25 u) | 600 | 1.0 | | 135 |
| Total 9260 | 0.96 | 2 | 29 (50 u) | 800 | 1 | | 135 |
| Total D 4720 | 0.949 | 0.28 | 24 (25 u) | 600 | 0.8 | | 131 |
| Total 717 | 0.958 | 0.30 | 34 (12 u) | 300 | 1.3 | | 135 |
| DOW DGDC NT7 | 0.950 | 0.07 | 42 (13 u) | 350 | 1 | | 128 |
| Total mPE M 6040 | 0.960 | 4.0 | 23 (20 u) | 550 | | | 134 |
| Total mPE 32ST05 | 0.932 | 0.5 | 16 (40 u) | 600 | | | 123 |
| Total mPE M5510 EP | 0.955 | 1.2 | 28 | 900 | | | 134 |
| Total mPE M4707 EP | 0.947 | 0.7 | 25 | 600 | | | 131 |

| **Table 2** | | | | | | | |
|---|---|---|---|---|---|---|---|
| Grade | D | MI | Tensile @Y MD (psi) | Tensile @Y TD (psi) | E@B MD | E@B TD | 1% Secant Modulus Kpsi MD/TD |
| Total 9260 | 0.96 | 2 | 4200 | 3600 | 850 | 500 | 140/180 |
| Total 6410 | 0.961 | 1.2 | 3800 | 4000 | 700 | 700 | 125/128 |
| Total 9548 | 0.958 | 0.45 | 4500 | 2600 | 270 | <10 | 152/199 |
| Total HL428 | 0947 | 0.28 | 3400 | 3800 | 450 | 600 | 103/145 |
| Total HL323 | 0.937 | 0.23 | 1800 | 2800 | 500 | 900 | 64/85 |
| Total M3410EP | 0.934 | 0.9 | 6400(B) | 6100(B) | 400 | 650 | 53/56 |
| Dow 5960G | 0.964 | 0.85 | 4100 | 4400 | 500 | 600 | 163/193 |

### Example 2: Sleeve Portion 120 - not part of the invention

A 7-layer cast co-extrusion film sleeve portion 120 was made with the following structure (e.g., from outer to inner):
- A first layer made of HDPE and having a thickness of 45 um;
- A second layer made of HDPE with a white pigment and having a thickness of 45 µm;
- A third layer made of HDPE and having a thickness of 70 µm;
- A fourth layer made of Tie resin and having a thickness of 15 µm;
- A fifth layer made of EVOH and having a thickness of 15 µm;
- A sixth layer made of Tie resin and having a thickness of 15 um;
- A seventh layer made of HDPE and having a thickness of 40 µm.

Thus, the outer layer 210 was made of three layers of HDPE and the thickness of the outer layer 210 was 160 µm, the thickness of the inner layer 250 was 40 µm, and the total thickness of the flexible package 100 was 245 µm. In this example, the HDPE was a metallene HDPE with a density of 0.960 g/m³ and a melt flow index of 4.0 g/10 min. The produced film had a basic weight of 288.7 g/sqm, a coefficient of friction of 0.41/0.41 (static/kinetic), and a free-falling dart impact strength of 445 g.

### Example 3: Sleeve Portion 120 - not part of the invention

A 9-layer blown film sleeve portion 120 was made with the following structure (e.g., from outer to inner):
- A first layer made of HDPE and having a thickness of 55 µm;
- A second layer made of HDPE with a white pigment and having a thickness of 50 µm;
- A third layer made of HDPE and having a thickness of 20 µm;
- A fourth layer made of HDPE and having a thickness of 25 µm;
- A fifth layer made of HDPE and having a thickness of 20 µm;
- A sixth layer made of Tie resin and having a thickness of 15 µm;
- A seventh layer made of EVOH and having a thickness of 15 µm;
- An eighth layer made of Tie resin and having a thickness of 15 µm;
- A ninth layer made of HDPE and having a thickness of 35 µm.

Thus, the outer layer 210 was made of five layers of HDPE, and the thickness of the outer layer 210 was 170 µm, the thickness of the inner layer 250 was 35 µm, and the total thickness of the flexible package 100 was 250 µm . The HDPE was a bimodal HDPE with a density of 0.951 g/cm³ and a melt flow index of 1.1 g/10 min. The produced film had a basic weight of 244.4 g/sqm, a coefficient of friction of 0.25/0.25 (static/kinetic), and a free-falling dart impact strength of 463 g. Due to the unsymmetrical layer structure, the film cured toward the outer side.

### Example 4: Sleeve Portion 120

A 9-layer blown film sleeve portion 120 with two HDPE grades was made. The two HDPE materials had different densities and were used to adjust the stress within different layers to obtain a flat film out of the unsymmetrical layer structure. The sleeve portion 120 had the following structure (e.g., from outer to inner):
- A first layer made of HDPE1 and having a thickness of 30 µm;
- A second layer made of HDPE2 and having a thickness of 50 µm;
- A third layer made of HDPE2 with a white pigment and having a thickness of 25 µm;
- A fourth layer made of HDPE2 with the white pigment and having a thickness of 25 µm;
- A fifth layer made of Tie resin and having a thickness of 15 µm;
- A sixth layer made of EVOH and having a thickness of 15 µm;
- A seventh layer made of Tie resin and having a thickness of 15 µm ;
- An eighth layer made of HDPE1 and having a thickness of 20 µm;
- A ninth layer made of HDPE1 and having a thickness of 25 µm.

Thus, the outer layer 210 was made of four layers of HDPE, and the thickness of the outer layer 210 was 130 µm, the thickness of the inner layer 250 was 45 µm, and the total thickness of the flexible package 100 was 220 µm . The HDPE1 was a bimodal HDPE material with a density of 0.951 g/cm³ and a melt flow index of 1.1 g/10 min. The HDPE2 was a high-stiffness grade material with a density of 0.965 g/cm³ and a melt flow index of 0.7 g/10 min. The produced film had a basic weight of 225.0 g/sqm, a coefficient of friction of 0.35/0.34 (static, kinetic), and a free-falling dart impact strength of 406 g. The film was flat with no curling in both the machine direction (MD) and the transverse direction (TD).

### Example 5: Sleeve Portion 120

This was an improved version of the sleeve portion 120 in Example 4 with improved sealibility to form a tube with strong mechanical properties. It was a 9-layer blown film sleeve portion 120 with two HDPE materials having different grades plus a thin layer of LLDPE as a sealant layer. The two HDPE materials had different densities and were used to adjust the stress within different layers to obtain a flat film out of the unsymmetrical layer structure. The sleeve portion 1 20 had the following structure (e.g., from outer to inner):
- A first layer made of HDPE1 and having a thickness of 35 µm;
- A second layer made of HDPE2 with a white pigment and having a thickness of 40 um;
- A third layer made of HDPE2 with a white pigment and having a thickness of 40 µm;
- A fourth layer made of HDPE2 and having a thickness of 40 µm;
- A fifth layer made of Tie resin and having a thickness of 15 µm;
- A sixth layer made of EVOH and having a thickness of 15 µm;
- A seventh layer made of Tie resin and having a thickness of 15 µm;
- An eighth layer made of HDPE1 and having a thickness of 30 µm;
- A ninth layer made of LLDPE and having a thickness of 20 µm. The ninth layer is used as a sealant to increase the sealability while also maintaining the total tube material density in the range of the density of the bottle grade of HDPE (0.95).

Thus, the outer layer 210 was made of four layers of HDPE, and the thickness of the outer layer 210 was 155 µm, the thickness of the inner layer 250 was 50 µm, and the total thickness of the flexible package 100 was 250 µm . The HDPE1 material was a bimodal HDPE material with a density of 0.951 g/cm³ and a melt flow index of 1.1 g/10 min. The HDPE2 material was a high-stiffness grade material with a density of 0.965 g/cm³ and a melt flow index of 0.7 g/10 min. The LLDPE was a blend of LDPE, LLDPE, and MDPE, which provided a good sealibility with an average density of 0.93 g/cm³ and a melt flow of <1 g/10 min. The produced film had a basic weight of 240 g/sqm, a coefficient of friction of 0.38/0.37 (static/kinetic), and a free-falling dart impact strength of 400 g. The film had no curling in the transverse direction.

### Example 6: Sleeve Portion 120

This is an improved version of the sleeve portion 120 in Example 5 with improved compatibility between HDPE and EVOH by using a compatibilizer (e.g., Dow's Retain) in the layers close to the EVOH layer. It was a 9-layer blown film sleeve portion 120 with two HDPE materials having different grades plus a thin layer of LLDPE as a sealant layer. The two HDPE materials had different densities and were used to adjust the stress within different layers to obtain a flat film out of the unsymmetrical layer structure. The sleeve portion 120 had the following structure (e.g., from outer to inner):
- A first layer made of HDPE1 and having a thickness of 35 µm;
- A second layer made of HDPE2 with a white pigment and having a thickness of 40 µm;
- A third layer made of HDPE2 with a white pigment and having a thickness of 35 µm;
- A fourth layer made of HDPE2 with 10 wt% compatibilizer and having a thickness of 45 µm;
- A fifth layer made of Tie resin with 10 wt% compatibilizer and having a thickness of 15 µm;
- A sixth layer made of EVOH and having a thickness of 15 µm;
- A seventh layer made of Tie resin with 10 wt% compatibilizer and having a thickness of 10 µm;
- An eighth layer made of HDPE1 and having a thickness of 30 µm;
- A ninth layer made of LLDPE and having a thickness of 20 µm. The overall/average density of the polyethylene in the sleeve portion 120 may be tuned to be in the bottle HDPE density recycling range, which is about 0.95 g/cm³ Thus the a majority of the sleeve portion 120 may be made using HDPE with a density greater than about 0.95 g/cm³, which may allow the use of a small amount of LDPE or LLDPE as a sealant layer.

Thus, the outer layer 210 was made of four layers of HDPE, the thickness of the outer layer 210 was 155 µm, the thickness of the inner layer 250 was 50 µm, and the total thickness of the flexible package 100 was 250 µm. The HDPE1 material was a bimodal HDPE with a density of 0.951 g/cm3 and a melt flow index of 1.1 g/10 min. The HDPE2 material was a high-stiffness grade with a density of 0.965 g/cm3 and a melt flow index of 0.7 g/10 min. The LLDPE was a blend of LDPE, LLDPE, and MDPE, which provided a good sealibility with an average density of 0.93 g/cm3 and a melt flow of <1 g/10 min. The compatibilizer was a functional polymer that promoted compatibility between HDPE and EVOH, such as Dow's Retain 3000. It had a density of 0.87 g/cm3. The produced film had a basic weight of 251 g/sqm, a coefficient of friction of 0.48/0.46 (static/kinetic), and a free-falling dart impact strength of 589 g. The film was flat with no curling in both the machine direction and the transverse direction.

### Example 7: Shoulder Portion 130

The shoulder portion is injection molded from an HDPE material with a density of 0.953 g/cm3 and a melt flow index of 0.95 g/10 min. The processing temperatures are set 20-40 °C higher than those for regular injection molding-grade HDPEs.

The sleeve portion and shoulder portion disclosed herein can be run smoothly on a tube-making machine (e.g., Aisa SAESAⓇ2000s) to make the tubes at the full speed. The tubes disclosed herein meet the critical guidance for HDPE recycling from the association of plastic recyclers (APR).

### Secondary Package

In at least one arrangement, the length and/or the width of the flexible package 100 may be smaller than the requirements for the HDPE bottle recycling stream, which would prevent the flexible package 100 from being introduced into the HDPE bottle recycling stream. In this arrangement, one of more of the flexible package(s) 100 may be placed into a larger secondary package (e.g., after the consumer product 102 is dispensed from the one of more of the flexible package(s) 100). The secondary package may have a size and a shape that is within the acceptable range for the HDPE bottle recycling stream, such as a cuboidal- or cylinder-shaped container that is approximately the size of a two liter beverage bottle. Thus, the secondary package with the one or more flexible package(s) 100 positioned therein can be recycled through the conventional HDPE bottle recycling stream. The one or more of the flexible package(s) 100 may also be transported, shelved, and/or sold in the secondary package prior to having the consumer product 102 dispensed therefrom and prior to recycling.

The secondary package may be made from extrusion grade HDPE with a melt flow index from about 0.3 g/10 min to about 3.0 g/10 min. A wall-thickness of the secondary package may be from about 0.05 mm to about 0.20 mm. The secondary package may be made via an extrusion blow molding process with a cover. In this arrangement, any decorations may be placed thereon as an adhesive label. In another arrangement, the secondary package may be made via a thermoforming process. In this arrangement, any decorations may be placed thereon via direct surface printing. In yet another arrangement, the secondary package may be made via an HDPE sheet-folding carton. In this arrangement, any decorations may be placed therein via a pressure-sensitive label or in-mold labelling.

## Claims

1. A recyclable package (100), comprising:
an outer layer (210) consisting essentially of a first high-density polyethylene (HDPE);
an inner layer (250) comprising a second HDPE;
a barrier layer (230) positioned between the outer layer (210) and the inner layer (250);
a first bonding layer (220) positioned between the outer layer (210) and the barrier layer (230); and
a second bonding layer (240) positioned between the inner layer (250) and the barrier layer (230);
wherein the outer layer (210) consists essentially of two or more different first HDPEs; and
wherein the two or more different first HDPEs comprise a first outer HDPE having a first density and a first melt flow index and a second outer HDPE having a second density and a second melt flow index, wherein the first density is less than the second density, and wherein the first melt flow index is greater than the second melt flow index.

2. The recyclable package (100) of claim 1, wherein the barrier layer (230) comprises aluminum or plastic.

3. The recyclable package (100) of claim 1 or claim 2, wherein the first bonding layer (220), the second bonding layer (240), or both comprise an adhesive material or an extruded melted tie resin.

4. The recyclable package (100) of any of claims 1-3, wherein the outer layer (210) consists of the first HDPE, wherein the inner layer (250) consists of the second HDPE, and wherein the first HDPE and the second HDPE are the same.

5. The recyclable package (100) of any of claims 1-4, further comprising a sealant layer positioned on an opposing side of the inner layer (250) from the second bonding layer (240), wherein the sealant layer comprises a linear low-density polyethylene (LLDPE) having a density from about 0.90 g/cm3 to about 0.95 g/cm3 and a melt flow index less than about 1 g/ 10 min.

6. The recyclable package (100) of any of claims 1-5, wherein the outer layer (210) comprises a compatibilizer in an amount from about 5 wt% to about 20 wt%, and wherein the compatibilizer has a density from about 0.85 g/cm3 to about 0.90 g/cm3.

7. The recyclable package (100) of claim 6, wherein the first bonding layer (220) and the second bonding layer (240) also comprise the compatibilizer in an amount from about 5 wt% to about 20 wt%.

8. The recyclable package (100) of any of claims 1-7, wherein the package (100) meets requirements for entering a HDPE recycling stream.

9. The recyclable package (100) of claim 1, consisting of:
the outer layer (210);
the inner layer (250);
the barrier layer (230);
the first bonding layer (220); and
the second bonding layer (240).

## Patentansprüche

1. Wiederverwertbare Verpackung (100), die umfasst:
eine äußere Schicht (210), die im Wesentlichen aus einem ersten Polyethylen hoher Dichte (HDPE) besteht;
eine innere Schicht (250), die ein zweites HDPE umfasst;
eine Sperrschicht (230), die zwischen der äußeren Schicht (210) und der inneren Schicht (250) angeordnet ist;
eine erste Verbindungsschicht (220), die zwischen der äußeren Schicht (210) und der Sperrschicht (230) angeordnet ist; und
eine zweite Verbindungsschicht (240), die zwischen der inneren Schicht (250) und der Sperrschicht (230) angeordnet ist;
wobei die äußere Schicht (210) im Wesentlichen aus zwei oder mehreren verschiedenen ersten HDPEs besteht; und
wobei die zwei oder mehr verschiedenen ersten HDPEs ein erstes äußeres HDPE mit einer ersten Dichte und einem ersten Schmelzflussindex und ein zweites äußeres HDPE mit einer zweiten Dichte und einem zweiten Schmelzflussindex umfassen, wobei die erste Dichte geringer als die zweite Dichte ist und wobei der erste Schmelzflussindex größer als der zweite Schmelzflussindex ist.

2. Wiederverwertbare Verpackung (100) nach Anspruch 1, wobei die Sperrschicht (230) Aluminium oder Kunststoff umfasst.

3. Wiederverwertbare Verpackung (100) nach Anspruch 1 oder Anspruch 2, wobei die erste Verbindungsschicht (220), die zweite Verbindungsschicht (240) oder beide ein Klebematerial oder ein extrudiertes geschmolzenes Bindeharz umfassen.

4. Wiederverwendbare Verpackung (100) nach einem der Ansprüche 1 bis 3, wobei die äußere Schicht (210) aus dem ersten HDPE besteht, wobei die innere Schicht (250) aus dem zweiten HDPE besteht und wobei das erste HDPE und das zweite HDPE gleich sind.

5. Wiederverwertbare Verpackung (100) nach einem der Ansprüche 1 bis 4, die ferner eine Versiegelungsschicht umfasst, die auf einer der zweiten Verbindungsschicht (240) gegenüberliegenden Seite der inneren Schicht (250) angeordnet ist, wobei die Versiegelungsschicht ein lineares Polyethylen niedriger Dichte (LLDPE) mit einer Dichte von etwa 0,90 g/cm³ bis etwa 0,95 g/cm³ und einem Schmelzflussindex von weniger als etwa 1 g/10 min umfasst.

6. Wiederverwertbare Verpackung (100) nach einem der Ansprüche 1 bis 5, wobei die äußere Schicht (210) einen Kompatibilisator in einer Menge von etwa 5 Gew.-% bis etwa 20 Gew.-% umfasst und wobei der Kompatibilisator eine Dichte von etwa 0,85 g/cm³ bis etwa 0,90 g/cm³ aufweist.

7. Wiederverwertbare Verpackung (100) nach Anspruch 6, wobei die erste Verbindungsschicht (220) und die zweite Verbindungsschicht (240) auch den Kompatibilisator in einer Menge von etwa 5 Gew.-% bis etwa 20 Gew.-% umfassen.

8. Wiederverwertbare Verpackung (100) nach einem der Ansprüche 1 bis 7, wobei die Verpackung (100) die Anforderungen für die Zuführung in einen HDPE-Recyclingstrom erfüllt.

9. Wiederverwertbare Verpackung (100) nach Anspruch 1, die aus:
der äußeren Schicht (210);
der inneren Schicht (250);
der Sperrschicht (230);
der ersten Verbindungsschicht (220); und
der zweiten Verbindungsschicht (240) besteht.

## Revendications

1. Emballage recyclable (100), comprenant :
une couche extérieure (210) constituée essentiellement d'un premier polyéthylène haute densité (PEHD);
une couche intérieure (250) comprenant un second PEHD;
une couche barrière (230) positionnée entre la couche extérieure (210) et la couche intérieure (250);
une première couche de liaison (220) positionnée entre la couche extérieure (210) et la couche barrière (230); et
une deuxième couche de liaison (240) positionnée entre la couche intérieure (250) et la couche barrière (230);
dans lequel la couche extérieure (210) consiste essentiellement en deux ou plusieurs premiers PEHD différents; et
dans lequel les deux ou plusieurs premiers PEHD différents comprennent un premier PEHD externe ayant une première densité et un premier indice de fluidité et un second PEHD externe ayant une seconde densité et un second indice de fluidité, dans lequel la première densité est inférieure à la seconde densité, et dans lequel le premier indice de fluidité est supérieur au second indice de fluidité.

2. L'emballage recyclable (100) de la revendication 1, dans lequel la couche barrière (230) comprend de l'aluminium ou du plastique.

3. L'emballage recyclable (100) de la revendication 1 ou de la revendication 2, dans lequel la première couche de liaison (220), la seconde couche de liaison (240), ou les deux, comprennent un matériau adhésif ou une résine de liaison fondue extrudée.

4. L'emballage recyclable (100) de l'une quelconque des revendications 1 à 3, dans lequel la couche extérieure (210) est constituée du premier PEHD, dans lequel la couche intérieure (250) est constituée du second PEHD, et dans lequel le premier PEHD et le second PEHD sont identiques.

5. L'emballage recyclable (100) de l'une quelconque des revendications 1 à 4, comprenant en outre une couche d'étanchéité positionnée sur un côté opposé de la couche interne (250) par rapport à la seconde couche de liaison (240), dans lequel la couche d'étanchéité comprend un polyéthylène basse densité linéaire (PEBDL) ayant une densité d'environ 0,90 g/cm3 à environ 0,95 g/cm3 et un indice de fluidité inférieur à environ 1 g/ 10 min.

6. L'emballage recyclable (100) de l'une quelconque des revendications 1 à 5, dans lequel la couche extérieure (210) comprend un agent de compatibilité en une quantité d'environ 5% en poids à environ 20% en poids, et dans lequel l'agent de compatibilité a une densité d'environ 0,85 g/cm3 à environ 0,90 g/cm3.

7. L'emballage recyclable (100) de la revendication 6, dans lequel la première couche de liaison (220) et la seconde couche de liaison (240) comprennent en outre l'agent de compatibilité en une quantité d'environ 5% en poids à environ 20% en poids.

8. L'emballage recyclable (100) de l'une quelconque des revendications 1 à 7, dans lequel l'emballage (100) répond aux exigences pour entrer dans un flux de recyclage de PEHD.

9. L'emballage recyclable (100) de la revendication 1, consistant en:
la couche extérieure (210);
la couche intérieure (250);
la couche barrière (230);
la première couche de liaison (220); et
la deuxième couche de liaison (240).
